# EUROPEAN PATENT APPLICATION

(11) **EP 4 537 662 A1**
(43) Date of publication of application: **16.04.2025**
(21) Application number: 24205239.7
(22) Date of filing: 08.10.2024
(51) Int. Cl.: A01N 25/30, A01N 43/30, A01N 43/40, A01N 43/82, A01N 43/90, A01P 13/00

(54) **ADJUVANT COMPOSITION, AN ADJUVANT, A USE OF THE ADJUVANT COMPOSITION AND A USE OF THE ADJUVANT**

(30) Priority: 09.10.2023 EP 23202302
(71) Applicant: Lesniewski, Adam, Croydon CR0 7SB (GB); Haigh, Graham, Huddersfield West Yorkshire HD8 9TR (GB)
(72) Inventor: Lesniewski, Adam, Croydon CR0 7SB (GB); Haigh, Graham, Huddersfield West Yorkshire HD8 9TR (GB)
(74) Representative: AOMB Polska Sp. z.o.o.

(57) **Abstract**

The present invention relates to the field of adjuvant compositions. More specifically, the invention focuses on enhancing the performance of adjuvants by improving their formulation and interaction with active substances to increase the efficacy of the plant protection products. An adjuvant composition, characterized in that it comprises from 10% to 50% w/v of piperonyl butoxide, from 0% to 10% w/v of tristyrylphenol ethoxylated, from 0% to 10% w/v of ethoxylated castor oil, from 0% to 75% w/v of methylated soybean oil, and from 0% to 20% w/v of polyalkylene modified heptamethyltrisiloxane.

The present invention relates also to an adjuvant and use of such an adjuvant composition or adjuvant.

## Description

### Technical Field

The present invention relates to the field of adjuvant compositions. More specifically, the invention focuses on enhancing the performance of adjuvants - auxiliary substances used in plant protection products alongside active ingredients - by improving their formulation and interaction with active substances to increase the efficacy of the plant protection products.

### Prior Art

Currently, the majority of plant protection products, particularly herbicides, rely on conventional adjuvants to enhance the efficacy of active ingredients. However, over time, many weed species develop resistance to these herbicides, diminishing their effectiveness. Traditional adjuvants often fail to adequately address this growing problem, as they are unable to significantly improve herbicide performance in resistant weed populations. As a result, there is an urgent need for new adjuvant formulations that can enhance the effectiveness of herbicides, even against resistant weed species. This invention addresses this challenge by introducing novel adjuvant compositions specifically designed to boost the performance of herbicides, improving their ability to combat resistant weeds and ensuring long-term effectiveness in agricultural applications.

Herbicides are chemical substances or compounds used in agriculture and horticulture to control or eliminate unwanted plants, commonly referred to as weeds. These weeds compete with crops for vital resources such as nutrients, water, and light, often reducing crop yield and quality. Herbicides target specific physiological processes within plants, causing disruption in their growth and metabolism. Depending on the mode of action, herbicides can be classified into different categories, including selective and non-selective. Selective herbicides target specific plant species, allowing desired crops to remain unaffected, while non-selective herbicides kill or damage all plant species they come into contact with. Herbicides can act through various mechanisms, such as inhibiting photosynthesis, disrupting cell division, or affecting the plant's ability to synthesize essential proteins.

Adjuvants are auxiliary substances incorporated into herbicide formulations to enhance their performance and effectiveness. While herbicides are the primary active ingredients in controlling weeds, adjuvants play a crucial role in optimizing the delivery and efficacy of these chemicals. They can improve herbicide spread, increase adherence to plant surfaces, and facilitate better absorption through leaves, stems, or roots. Additionally, adjuvants can help overcome environmental challenges, such as reducing the evaporation of herbicides in hot conditions, minimizing surface runoff, and increasing the persistence of the herbicide in the target area. By improving the interaction between the herbicide and the target plant, adjuvants can increase the likelihood of successful weed control, even when dealing with herbicide-resistant species.

The role of adjuvants becomes particularly critical in modern agriculture, as the growing prevalence of herbicide-resistant weeds presents a significant challenge. Weeds that have developed resistance to certain herbicides can drastically reduce the effectiveness of these treatments, forcing farmers to use higher doses or switch to more toxic chemicals. Adjuvants designed to improve herbicide performance in resistant weed populations could be key in extending the utility of herbicides and reducing the reliance on more harmful chemical alternatives. Consequently, there is a pressing need for innovative adjuvant formulations that can enhance the effectiveness of herbicides and contribute to sustainable, long-term weed management strategies.

Adjuvants play a crucial role in herbicidal formulations and spray mixtures by enhancing herbicide efficacy or facilitating application. Adjuvants can be classified into two main categories: activator adjuvants and utility-modifying adjuvants (or specialty adjuvants).

Activator adjuvants, such as surfactants, crop oil concentrates (COC), and nitrogen (N), are typically used to improve herbicide performance by increasing retention or penetration of herbicides on or into leaf surfaces, enhancing rainfastness, or reducing photodegradation of herbicides.

Utility-modifying adjuvants, such as buffering agents, defoamers, and drift control agents, generally alter the properties of the spray solution and improve product compatibility.

### Summary of the Invention

According to the invention an adjuvant composition comprising from 10% to 50% w/v of piperonyl butoxide, from 0% to 10% w/v of tristyrylphenol ethoxylated, from 0% to 10% w/v of ethoxylated castor oil, from 0% to 75% w/v of methylated soybean oil, and from 0% to 20% w/v of polyalkylene modified heptamethyltrisiloxane.

Preferably the adjuvant composition consists of 50% w/v of piperonyl butoxide, 40% w/v of methylated soybean oil, and 10% w/v of polyalkylene modified heptamethyltrisiloxane.

Preferably the adjuvant composition consists of 25% w/v of piperonyl butoxide, 60% w/v of methylated soybean oil, and 15% w/v of polyalkylene modified heptamethyltrisiloxane.

Preferably the adjuvant composition consists of 10% w/v of piperonyl butoxide, 72% w/v of methylated soybean oil, and 18% w/v of polyalkylene modified heptamethyltrisiloxane.

Another aspect of the invention is an adjuvant comprising from 10% to 50% w/v of piperonyl butoxide, from 0% to 10% w/v of tristyrylphenol ethoxylated, from 0% to 10% w/v of ethoxylated castor oil, from 0% to 75% w/v of methylated soybean oil, and from 0% to 20% w/v of polyalkylene modified heptamethyltrisiloxane.

Preferably the adjuvant consists of 50% w/v of piperonyl butoxide, 40% w/v of methylated soybean oil, and 10% w/v of polyalkylene modified heptamethyltrisiloxane.

Preferably the adjuvant consists of 25% w/v of piperonyl butoxide, 60% w/v of methylated soybean oil, and 15% w/v of polyalkylene modified heptamethyltrisiloxane.

Preferably the adjuvant consists of 10% w/v of piperonyl butoxide, 72% w/v of methylated soybean oil, and 18% w/v of polyalkylene modified heptamethyltrisiloxane.

Yet another aspect of the invention is a use of the adjuvant composition in a combination with herbicides.

Preferably the adjuvant composition is used for the control of *Alopecurus myosuroides.*

Yet another aspect of the invention is a use of the adjuvant in a combination with herbicides.

Preferably the adjuvant is used for the control of *Alopecurus myosuroides.*

The new adjuvant composition addresses several pressing challenges faced by modern agriculture, particularly in the context of herbicide use and weed resistance. One of the most critical issues is the growing problem of herbicide resistance, where weed populations evolve and become tolerant to common herbicides. Conventional herbicide formulations, including adjuvants, often struggle to maintain effectiveness against these resistant species, leading to diminished control and the need for higher doses or alternative chemicals. The novel adjuvant composition improves the uptake, absorption, and translocation of herbicides within the plant, enhancing the efficacy of herbicides even against resistant weed populations. This ensures more effective control, reducing the need for stronger or more toxic chemicals, and ultimately helping to combat the development of resistance.

In addition to addressing resistance, the invention offers a solution for reintroducing older, more affordable herbicides that have fallen out of favor due to their perceived ineffectiveness in modern applications. These generic herbicides, often priced lower than newer alternatives, can become viable once more when combined with the innovative adjuvant. The new composition enhances the herbicide's performance under a wider range of conditions, increasing its ability to adhere to plant surfaces, penetrate leaf cuticles, and move more efficiently through the plant. This rejuvenates the effectiveness of older products, making them a cost-effective alternative for farmers and reducing the need for more expensive herbicide options.

Moreover, the new adjuvant composition significantly reduces the number of active ingredients applied to the environment. By improving the performance of a single herbicide, the need for multiple herbicide applications or combinations of different active ingredients is reduced. This not only decreases the environmental footprint by minimizing chemical use, but also lowers the risk of contamination and environmental damage. Fewer active ingredients also help slow the development of herbicide resistance, as it reduces the exposure of weeds to multiple modes of action simultaneously. This reduction in chemical inputs is aligned with current agricultural trends, where regulatory bodies are increasingly limiting the amount of pesticides and herbicides used in farming.

As regulations around pesticide use tighten, the new adjuvant composition helps meet reduced application rates imposed by regulatory bodies. With increasing pressure to minimize chemical applications, the formulation of this adjuvant allows herbicides to remain effective even at lower dosages. This makes it easier for farmers to comply with stricter regulations while still achieving optimal weed control. The ability to maintain effective herbicide performance at reduced application rates is crucial for ensuring sustainability in agriculture, while also reducing costs for farmers.

Finally, the new adjuvant improves overall crop yields by maximizing herbicide coverage across the plant. By enhancing the spread and absorption of herbicides, it ensures that the active ingredient covers both the upper and lower surfaces of leaves, as well as the stems, resulting in more uniform and effective weed control. This comprehensive coverage allows for better management of weeds, which are the primary competitors for nutrients, water, and light in crop fields. As a result, crop yields can be increased, and farmers can achieve better productivity from their land.

The versatility of the new adjuvant composition is further demonstrated by its compatibility in a single tank mix with various herbicides. This "one can does all" approach simplifies the spraying process for farmers, eliminating the need for multiple adjuvants or herbicides. This not only reduces costs and complexity but also ensures operational efficiency, minimizing the chances of compatibility issues between different chemicals. Farmers can now manage diverse crops and weed species with a single formulation, streamlining their herbicide application and ensuring consistent, reliable results.

The novel adjuvant composition addresses several critical challenges in modern agriculture, from herbicide resistance to environmental concerns and regulatory compliance. It enhances the performance of herbicides, helps reintroduce affordable products, reduces chemical usage, and simplifies application processes, ultimately improving both the economic and environmental sustainability of farming practices.

### Examples

### Study on the effectiveness of adjuvants in winter wheat crop for the control of Alopecurus myosuroides

Table 1 shows the combinations of different herbicides used with adjuvant compositions (1, 2, and 3) comprising different amounts of ingredients selected from piperonyl butoxide, tristyrylphenol ethoxylated, ethoxylated castor oil, methylated soybean oil, and polyalkylene modified heptamethyltrisiloxane.

**Table 1. Herbicide combinations with adjuvants**

| | | | | | |
|---|---|---|---|---|---|
| 1. | | Control/Untreated | | - | - |
| 2. | | Control + Corrida (for dicotyledons) | | 0,02 kg | A |
| 3. | | Pontos | | 0,75 L | A |
| 4. | | Pontos + Adjuvant 1 (5050) | | 0,75 L | A |
| | | | | - | |
| 5. | | Pontos + Adjuvant 2 (7525) | | 0,75 L | A |
| | | | | | |
| 6. | | Pontos + Adjuvant 3 (9010) | | 0,75 L | A |
| | | | | - | |
| 7. | | Axial complet | | 0,75 L | B |
| 8. | | Axial Complet + Adjuvant 1 (5050) | | 0,75 L | B |
| | | | | | |
| 9. | | Axial Complet + Adjuvant 2 (7525) | | 0,75 L | B |
| | | | | - | |
| 10. | | Axial Complet + Adjuvant 3 (9010) | | 0,75 L | B |
| | | | | - | |

| Date of treatment / Time of application: | | | | | |
|---|---|---|---|---|---|
| | A - BBCH -12-14 - two-four leaves | | | | |
| | B - BBCH 30 - spring start of vegetation | | | | |
| Spray volume [L/ha] / Spray volume [L/ha] | | | 200 L/ha | | |

In the first year of the study (2022), a higher winter wheat grain yield was obtained as a result of weed control in autumn, compared to spring control. The difference between the tested herbicide application dates was 0.46 t/ha. Regardless of the treatment date (autumn, spring), the addition of adjuvant No. 1 (5050) to the spray increased winter wheat grain yield by 4.45%, adjuvant No. 2 (7525) by 7.82%, and adjuvant No. 3 (9010) by 3.48%, compared to the control treatment without the application of any adjuvant (Table 2). On the other hand, in the second year of the study (2023), a higher winter wheat grain yield was obtained as a result of weed control in autumn, compared to spring control. The difference between the tested herbicide application dates was 0.98 t/ha. Regardless of the treatment date (autumn, spring), the addition of adjuvant No. 1 (5050) to the spray increased winter wheat grain yield by 8.83%, adjuvant No. 2 (7525) by 15.03%, and adjuvant No. 3 (9010) by 5.82%, compared to the control object without the application of any adjuvant (Table 3). In general, it should be concluded that the greater the biotic and abiotic stress, the more effective the addition of adjuvants to the spray.

**Table 2. Grain yield (t/ha) - 2022 Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 8,56 | 8,88 | 9,24 | 8,81 | 8,87 |
| Spring - BBCH 30 (Axial Complet) | 8,06 | 8,48 | 8,68 | 8,40 | 8,41 |
| **Average** | 8,31 | 8,68 (+4,45%) | 8,96 (+7,82%) | 8,60 (+3,48%) | - |
| Absolute control | | | | | 6,12 |
| Control - Corrida herbicide (for dicotyledons) | | | | | 7,12 |

**Table 3. Grain yield (t/ha) - 2023 Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 5,67 | 6,31 | 6,80 | 6,04 | 6,20 |
| Spring - BBCH 30 (Axial Complet) | 4,97 | 5,27 | 5,44 | 5,23 | 5,22 |
| **Average** | 5,32 | 5,79 (+8,835) | 6,12 (+15,03%) | 5,63 (+5,82%) | - |
| Absolute control | | | | | 4,49 |
| Control - Corrida herbicide (for dicotyledons) | | | | | 5,34 |

In both the first year of the study (2022) and the second year (2023), the timing of the herbicide treatment and the addition of an adjuvant to the spray had no significant effect on the water content of winter wheat grain. It should be concluded that the conditions during the growing season determine to the greatest extent the water content of winter wheat grain at harvest (Table 4, Table 5).

**Table 4. Moisture content of grain (%) - 2022 Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 11,60 | 11,50 | 11,60 | 11,60 | 11,57 |
| Spring - BBCH 30 (Axial Complet) | 11,60 | 11,50 | 11,50 | 11,50 | 11,52 |
| **Average** | 11,60 | 11,50 | 11,55 | 11,55 | - |
| Absolute control | | | | | 11,60 |
| Control - Corrida herbicide (for dicotyledons) | | | | | 11,50 |

**Table 5. Moisture content of grain (%) - 2023 Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 15,90 | 15,70 | 15,90 | 15,90 | 15,85 |
| Spring - BBCH 30 (Axial Complet) | 16,00 | 15,70 | 15,90 | 16,00 | 15,90 |
| **Average** | 15,95 | 15,70 | 15,90 | 15,95 | - |
| Absolute control | | | | | 15,80 |
| Control - Corrida herbicide (for dicotyledons) | | | | | 15,70 |

In both the first year of the study (2022) and the second year (2023), the timing of herbicide treatment and the addition of an adjuvant to the spray had no significant effect on the thousand-seed weight (MTN) of winter wheat grain. It should be concluded that the conditions (temperature, precipitation) during the growing season determine the value of the analysed trait to the greatest extent (Table 6, Table 7).

**Table 6. Thousand grain weight (g) - 2022 Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 48,09 | 48,43 | 47,45 | 4778 | 47,94 |
| Spring - BBCH 30 (Axial Complet) | 49,73 | 48,75 | 49,65 | 50,87 | 49,75 |
| **Average** | 48,91 | 48,59 | 48,55 | 49,33 | - |
| Absolute control | | | | | 47,66 |
| Control - Corrida herbicide (for dicotyledons) | | | | | 50,18 |

**Table 7. Thousand grain weight (g) - 2023 Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 48,69 | 46,27 | 48,36 | 47,20 | 47,63 |
| Spring - BBCH 30 (Axial Complet) | 46,65 | 48,31 | 47,31 | 47,75 | 47,50 |
| **Average** | 47,67 | 47,29 | 47,83 | 47,47 | - |
| Absolute control | | | | | 47,48 |
| Control - Corrida herbicide (for dicotyledons) | | | | | 50,27 |

In the first year of the study (2022), fewer *Alopecurus myosuroides panicles* were obtained in the winter wheat plantation as a result of weed control in autumn, compared to spring control. Irrespective of the timing of the treatment (autumn, spring), the addition of adjuvant No. 1 (5050) to the spray reduced the number of *Alopecurus myosuroides panicles* by 30.97%, adjuvant No. 2 (7525) by 69.50%, and adjuvant No. 3 (9010) by 25.57% compared to the control object without the application of any adjuvant (Table 8). On the other hand, in the second year of the study (2023), also significantly fewer panicles of *Alopecurus myosuroides in the* winter wheat plantation were obtained as a result of weed control in autumn, compared to spring control. Regardless of the treatment date (autumn, spring), the addition of adjuvant No. 1 (5050) to the spray reduced the weed infestation of winter wheat *Alopecurus myosuroides* by 27.89%, adjuvant No. 2 (7525) by 50.80%, while adjuvant No. 3 (9010) by 23.25%, compared to the control object without the application of any adjuvant (Table 9). In general, it should be concluded that the greater the biotic and abiotic stress, the more effective the addition of adjuvants to the spray is, with a clear effect of reducing the weed infestation of the winter wheat canopy *of Alopecurus myosuroides.*

**Table 8. number of panicles of Alopecurus myosuroides (pcs/m²) - 2022Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 8,25 | 5,41 | 1,91 | 5,66 | 5,31 |
| Spring - BBCH 30 (Axial Complet) | 8,41 | 6,08 | 3,16 | 6,75 | 6,10 |
| **Average** | 8,33 | 5,75 (-30,97%) | 2,54 (-69,50%) | 6,20 (-25,57%) | - |
| Absolute control | | | | | 17,75 |
| Control - Corrida herbicide (for dicotyledons) | | | | | 17,66 |

**Table 9. number of panicles of Alopecurus myosuroides (pcs/m²) - 2023Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 15,75 | 12,00 | 6,87 | 12,75 | 11,84 |
| Spring - BBCH 30 (Axial Complet) | 19,18 | 13,18 | 10,31 | 14,06 | 14,18 |
| **Average** | 17,46 | 12,59 (-27,89%) | 8,59 (-50,80%) | 13,40 (-23,25%) | - |
| Absolute control | | | | | 43,68 |
| Control - Corrida herbicide (for dicotyledons) | | | | | 42,00 |

For traits such as protein content in grain (Tables 10 and 11), starch content in grain (Tables 12 and 13), gluten content in grain (Tables 14 and 15) and hectolitre weight of winter wheat grain (Tables 16 and 17), it is mainly the thermal and moisture conditions during the winter wheat growing season that differentiate the values of these winterwheat grain quality traits.

**Table 10. Protein content of grain (%) - 2022 Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 11,25 | 11,37 | 11,50 | 11,42 | 11,38 |
| 11.32Spring - BBCH 30 (Axial Complet) | 11,35 | 11,20 | 11,32 | 11,42 | 11,32 |
| **Average** | 11,30 | 11,28 | 11,41 | 11,42 | - |
| Absolute control | | | | | 11,1 |
| Control - Corrida herbicide (for dicotyledons) | | | | | 11,3 |

**Table 11. Protein content of grain (%) - 2023 Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 9,4 | 9,4 | 8,9 | 9,2 | 9,22 |
| 11.32Spring - BBCH 30 (Axial Complet) | 9,4 | 9,4 | 9,3 | 9,2 | 9,32 |
| **Average** | 9,40 | 9,40 | 9,10 | 9,20 | - |
| Absolute control | | | | | 9,20 |
| Control - Corrida herbicide (for dicotyledons) | | | | | 10,30 |

**Table 12. Starch content of grain (%) - 2022 Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 72,05 | 71,92 | 71,50 | 71,50 | 71,74 |
| 11.32Spring - BBCH 30 (Axial Complet) | 71,72 | 71,45 | 71,72 | 71,62 | 71,63 |
| **Average** | 71,88 | 71,68 | 71,61 | 71,56 | - |
| Absolute control | | | | | 71,7 |
| Control - Corrida herbicide (for dicotyledons) | | | | | 72,0 |

**Table 13. Starch content of grain (%) - 2023 Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 72,80 | 72,90 | 73,30 | 72,90 | 72,97 |
| 11.32Spring - BBCH 30 (Axial Complet) | 72,40 | 72,50 | 72,60 | 72,50 | 72,50 |
| **Average** | 72,60 | 72,70 | 72,95 | 72,70 | - |
| Absolute control | | | | | 72,60 |
| Control - Corrida herbicide (for dicotyledons) | | | | | 72,40 |

**Table 14. Gluten content of grain (%) - 2022 Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 23,80 | 24,20 | 24,80 | 24,52 | 24,33 |
| 11.32Spring - BBCH 30 (Axial Complet) | 24,45 | 24,05 | 24,15 | 24,87 | 24,38 |
| **Average** | 24,12 | 24,12 | 24,47 | 24,7 | - |
| Absolute control | | | | | 23,6 |
| Control - Corrida herbicide (for dicotyledons) | | | | | 24,3 |

**Table 15. Gluten content of grain (%) - 2023 Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 17,90 | 17,90 | 16,50 | 17,1 | 17,35 |
| 11.32Spring - BBCH 30 (Axial Complet) | 17,60 | 17,50 | 16,9 | 16,9 | 17,22 |
| **Average** | 17,75 | 17,70 | 16,70 | 17,00 | - |
| Absolute control | | | | | 17,20 |
| Control - Corrida herbicide (for dicotyledons) | | | | | 19,80 |

**Table 16. Hectolitre weight (kg/hl) - 2022 Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 78,95 | 79,17 | 79,25 | 78,95 | 79,08 |
| 11.32Spring - BBCH 30 (Axial Complet) | 79,20 | 78,62 | 78,72 | 78,92 | 78,86 |
| **Average** | 79,07 | 78,90 | 78,98 | 78,93 | - |
| Absolute control | | | | | 78,90 |
| Control - Corrida herbicide (for dicotyledons) | | | | | 79,30 |

**Table 17. Hectolitre weight (kg/hl) - 2023 Year**

| Treatment date | Use of an adjuvant | | | | **Average** |
|---|---|---|---|---|---|
| | Without adjuvant | Adjuvant 1 (5050) | Adjuvant 2 (7525) | Adjuvant 3 (9010) | |
| Autumn - BBCH 12/14 (Pontos) | 75,70 | 76,20 | 75,00 | 75,30 | 75,55 |
| 11.32Spring - BBCH 30 (Axial Complet) | 74,40 | 74,90 | 74,50 | 74,30 | 74,52 |
| **Average** | 75,05 | 75,55 | 74,75 | 74,80 | - |
| Absolute control | | | | | 74,10 |
| Control - Corrida herbicide (for dicotyledons) | | | | | 77,10 |

**Table 18. Crop data/Crop description - 2024 Year**

| Crop/Crop | Winter wheat |
|---|---|
| Variety/Variety | Arcadia |
| Sowing/planting rate[kg/ha]/ Sowing rate [kg/ha] | 190 kg/ha |
| Row spacing [cm] / Row spacing [cm] | 12.5 cm |
| Date of sowing/planting/ Sowing date | 04.10.2023 |
| Origin of the seed | Centrala Nasienna Środa Wielkopolska |
| Autumn treatment - BBCH 12 - 13- 24.10.23 | |
| Spring treatment - BBCH- 29-30 -8.04.24 | |

Tables 19-21 demonstrate that the use of the adjuvant, when added to various herbicides, does not negatively affect crop quality or yield. This remains consistent regardless of whether the adjuvant is applied at a rate of 500 ml/ha or 700 ml/ha. The data confirm that, across different application rates, the adjuvant maintains its compatibility with the herbicides and ensures effective performance without compromising the health or productivity of the crops. This finding underscores the adjuvant's versatility and reliability in agricultural applications, providing flexibility in its usage without risking adverse effects on crop yield.

Moreover, the results indicate that the adjuvant's performance remains stable across a variety of herbicides, further validating its broad-spectrum compatibility. This stability suggests that the adjuvant can be effectively integrated into diverse herbicidal treatment programs without the need for significant adjustments to dosage, making it a practical solution for farmers and agricultural professionals. Additionally, the lack of any negative impact on crop quality highlights its safety profile, ensuringthat even at higher application rates, the adjuvant does not introduce any risk of phytotoxicity or stress to the crops. Consequently, this provides a robust advantage in maximizing herbicidal efficacy while safeguarding crop health.

**Table 19. Winter wheat grain yield depending on weed control variant (t/ha)**

| **Herbicide** | **Adjuvant** | **Concentration** | | **Medium** |
|---|---|---|---|---|
| | | **500 ml/ha** | **700 ml/ha** | |
| Pontos | Adjuvant 1 | 8,65 | 8,65 | 8,65 |
| | Adjuvant 2 | 8,22 | 7,55 | 7,88 |
| | Adjuvant 3 | 7,61 | 7,41 | 7,51 |
| | **Medium** | **8,16** | **7,87** | **8,01** |
| Axial complete | Adjuvant 1 | 4,70 | 4,43 | 4,56 |
| | Adjuvant 2 | 5,08 | 4,29 | 4,68 |
| | Adjuvant 3 | 4,40 | 4,88 | 4,64 |
| | **Medium** | **4,72** | **4,53** | **4,63** |
| Flufenacet + DFF | Adjuvant 1 | 6,88 | 7,63 | 7,25 |
| | Adjuvant 2 | 7,10 | 6,36 | 6,73 |
| | Adjuvant 3 | 6,73 | 7,15 | 6,94 |
| | **Medium** | **6,90** | **7,04** | **6,97** |
| Flufenacet + Metrabuzin | Adjuvant 1 | 8,31 | 8,93 | 8,62 |
| | Adjuvant 2 | 8,61 | 8,35 | 8,48 |
| (Expert Met) + DFF | Adjuvant 3 | 8,81 | 8,62 | 7,81 |
| | **Medium** | **8,57** | **8,63** | **8,60** |
| Average for herbicide, adjuvant and adjuvant dose | Adjuvant 1 | 7,13 | 7,41 | 7,27 |
| | Adjuvant 2 | 7,25 | 6,63 | 6,94 |
| | Adjuvant 3 | 6,89 | 7,01 | 6,95 |
| | **Medium** | **7,09** | **7,02** | - |
| | Absolute control - 4.15 | | | |
| | Pontos - 7.00 | | | |
| | Axial complete - 4.68 | | | |
| | Flufenacet + DFF - 6.13 | | | |
| | Flufenacet + Metrabuzin (Expert Met) + DFF - 7.59 | | | |

**Table 20. Moisture content of winter wheat grain in relation to weed control variant (%)**

| **Herbicide** | **Adjuvant** | **Concentration** | | **Medium** |
|---|---|---|---|---|
| | | **500 ml/ha** | **700 ml/ha** | |
| Pontos | Adjuvant 1 | 12,5 | 12,5 | 12,5 |
| | Adjuvant 2 | 12,4 | 12,3 | 12,3 |
| | Adjuvant 3 | 12,4 | 12,3 | 12,3 |
| | **Medium** | **12,4** | **12,3** | **12,4** |
| Axial complete | Adjuvant 1 | 12,7 | 12,4 | 12,5 |
| | Adjuvant 2 | 12,3 | 12,5 | 12,4 |
| | Adjuvant 3 | 12,4 | 12,7 | 12,5 |
| | **Medium** | **12,4** | **12,5** | **12,5** |
| Flufenacet + DFF | Adjuvant 1 | 12,2 | 12,1 | 12,1 |
| | Adjuvant 2 | 12,5 | 12,6 | 12,5 |
| | Adjuvant 3 | 12,6 | 12,3 | 12,4 |
| | **Medium** | **12,4** | **12,3** | **12,4** |
| Flufenacet + Metrabuzin (Expert Met) + DFF | Adjuvant 1 | 12,5 | 12,6 | 12,5 |
| | Adjuvant 2 | 12,5 | 12,4 | 12,4 |
| | Adjuvant 3 | 12,8 | 12,4 | 12,6 |
| | **Medium** | **12,6** | **12,4** | **12,5** |
| Average for herbicide, adjuvant and adjuvant dose | Adjuvant 1 | 12,4 | 12,4 | 12,4 |
| | Adjuvant 2 | 12,4 | 12,4 | 12,4 |
| | Adjuvant 3 | 12,5 | 12,4 | 12,5 |
| | **Medium** | **12,5** | **12,4** | - |
| | Absolute control - 12.5 | | | |
| | Pontos - 12.3 | | | |
| | Axial complete - 12.2 | | | |
| | Flufenacet + DFF - 12.5 | | | |
| | Flufenacet + Metrabuzin (Expert Met) + DFF - 12.3 | | | |

**Table 21. Thousand grain weight (MTN) of winter wheat depending on weed control variant (g)**

| **Herbicide** | **Adjuvant** | **Concentration** | | **Medium** |
|---|---|---|---|---|
| | | **500 ml/ha** | **700 ml/ha** | |
| Pontos | Adjuvant 1 | 45,6 | 45,9 | 45,7 |
| | Adjuvant 2 | 45,8 | 44,6 | 45,2 |
| | Adjuvant 3 | 45,9 | 43,9 | 44,9 |
| | **Medium** | **45,7** | **44,8** | **45,3** |
| Axial complete | Adjuvant 1 | 42,7 | 44,0 | 43,3 |
| | Adjuvant 2 | 42,5 | 42,6 | 42,5 |
| | Adjuvant 3 | 42,2 | 44,4 | 43,3 |
| | **Medium** | **42,4** | **43,6** | **43,1** |
| Flufenacet + DFF | Adjuvant 1 | 46,4 | 44,7 | 45,5 |
| | Adjuvant 2 | 45,3 | 46,4 | 45,5 |
| | Adjuvant 3 | 45,9 | 45,9 | 45,5 |
| | **Medium** | **46,4** | **44,7** | **45,8** |
| Flufenacet + Metrabuzin (Expert Met) + DFF | Adjuvant 1 | 43,7 | 43,8 | 43,7 |
| | Adjuvant 2 | 44,0 | 43,8 | 43,9 |
| | Adjuvant 3 | 44,9 | 44,8 | 44,8 |
| | **Medium** | **44,2** | **44,1** | **44,2** |
| Average for | Adjuvant 1 | 44,6 | 44,6 | 44,6 |
| herbicide, adjuvant and adjuvant dose | Adjuvant 2 | 44,4 | 44,4 | 44,4 |
| | Adjuvant 3 | 44,7 | 44,8 | 44,7 |
| | **Medium** | **44,6** | **44,6** | - |
| | Absolute control - 45.2 | | | |
| | Pontos - 45.4 | | | |
| | Axial complete - 43.0 | | | |
| | Flufenacet + DFF - 44.5 | | | |
| | Flufenacet + Metrabuzin (Expert Met) + DFF - 44.6 | | | |

## Claims

1. An adjuvant composition, **characterized in that** it comprises from 10% to 50% w/v of piperonyl butoxide, from 0% to 10% w/v of tristyrylphenol ethoxylated, from 0% to 10% w/v of ethoxylated castor oil, from 0% to 75% w/v of methylated soybean oil, and from 0% to 20% w/v of polyalkylene modified heptamethyltrisiloxane.

2. The adjuvant composition according to claim 1, **characterized in that** it consists of 50% w/v of piperonyl butoxide, 40% w/v of methylated soybean oil, and 10% w/v of polyalkylene modified heptamethyltrisiloxane.

3. The adjuvant composition according to claim 1, **characterized in that** it consists of 25% of piperonyl butoxide, 60% w/v of methylated soybean oil, and 15% w/v of polyalkylene modified heptamethyltrisiloxane.

4. The adjuvant composition according to claim 1, **characterized in that** it consists of 10% of piperonyl butoxide, 72% w/v of methylated soybean oil, and 18% w/v of polyalkylene modified heptamethyltrisiloxane.

5. An adjuvant, **characterized in that** it comprises from 10% to 50% w/v of piperonyl butoxide, from 0% to 10% w/v of tristyrylphenol ethoxylated, from 0% to 10% w/v of ethoxylated castor oil, from 0% to 75% w/v of methylated soybean oil, and from 0% to 20% w/v of polyalkylene modified heptamethyltrisiloxane.

6. The adjuvant according to claim 5, **characterized in that** it consists of 50% of piperonyl butoxide, 40% w/v of methylated soybean oil, and 10% w/v of polyalkylene modified heptamethyltrisiloxane.

7. The adjuvant according to claim 5, **characterized in that** it consists of 25% of piperonyl butoxide, 60% w/v of methylated soybean oil, and 15% w/v of polyalkylene modified heptamethyltrisiloxane.

8. The adjuvant according to claim 5, **characterized in that** it consists of 10% of piperonyl butoxide, 72% w/v of methylated soybean oil, and 18% w/v of polyalkylene modified heptamethyltrisiloxane.

9. A use of the adjuvant composition of any of claims 1 to 4 in a combination with herbicides.

10. The use of the adjuvant composition according to claim 9 for the control of *Alopecurus myosuroides.*

11. A use of the adjuvant of any of claims 5 to 8 in a combination with herbicides.

12. The use of the adjuvant according to claim 11 for the control of *Alopecurus myosuroides.*
